Europäisches Patentamt

(19) European Patent Office

Office européen des brevets

(11) Numéro de publication: **0 278 878**
**B1**

(12) **FASCICULE DE BREVET EUROPEEN**

(45) Date de publication du fascicule du brevet:
18.04.90

(51) Int. Cl.⁴: **B01J 13/02, B41M 5/124**

(21) Numéro de dépôt: **88420031.2**

(22) Date de dépôt: **01.02.88**

(54) Procédé amélioré de microencapsulation par polyaddition interfaciale.

(30) Priorité: **11.02.87 FR 8701899**

(43) Date de publication de la demande:
**17.08.88 Bulletin 88/33**

(45) Mention de la délivrance du brevet:
**18.04.90 Bulletin 90/16**

(84) Etats contractants désignés:
**AT BE CH DE ES FR GB GR IT LI LU NL SE**

(56) Documents cités:
**EP-A- 0 148 769**
**EP-A- 0 227 562**
**GB-A- 2 073 697**
**US-A- 4 021 595**

(73) Titulaire: **RHONE-POULENC CHIMIE, 25, quai Paul Doumer, F-92408 Courbevoie Cédex(FR)**

(72) Inventeur: **Vivant, Gilbert, 87 ter, rue du Docteur Edmond Locard, F-69005 Lyon(FR)**

(74) Mandataire: **Vignally, Noel et al, Rhône-Poulenc Interservices Service Brevets Chimie Centre de Recherches des Carrières B.P. 62, F-69192 Saint-Fons Cédex(FR)**

## Description

La présente invention est un perfectionnement à la microencapsulation de composés par polyaddition interfaciale.

Elle concerne plus particulièrement la préparation de microcapsules dont la paroi est constituée de polyurée.

Dans la demande de brevet français No. 85-18453, déposée le 10 décembre 1985 (& EP-A 227 562, appartenant à l'état de la technique au sens de l'article 54.3 CBE), il a été décrit un procédé de microencapsulation par polyaddition interfaciale, consistant à émulsionner dans un liquide essentiellement aqueux un liquide organique hydrophobe contenant un polyisocyanate et éventuellement un produit organique dissous, puis à former les parois des microcapsules par addition d'une polyamine, ledit procédé étant caractérisé en ce que le polyisocyanate comprend :

- un diisocyanate aliphatique
- et le trimère à cycle isocyanurate d'un diisocyanate aliphatique,

avec un rapport pondéral diisocyanate/trimère de 0,05/1 à 0,70/1.

Le trimère à cycle isocyanurate peut être le trimère du diisocyanate aliphatique utilisé ou le trimère d'un autre diisocyanate aliphatique.

Comme diisocyanate aliphatique, on peut utiliser par exemple le diisocyanato-1,6 hexane, le diisocyanato-1,5 méthyl-2 pentane, le diisocyanato-1,5 méthyl-3 pentane, le diisocyanato-1,4 diméthyl-2,3 butane, l'éthyl-2 diisocyanato-1,4 butane, le diisocyanato-1,5 pentane, le diisocyanato-1,4 butane, le diisocyanato-1,3 propane, le diisocyanato-1,10 décane, le diisocyanato-1,2 cyclohexane, le diisocyanato-1,4 cyclohexane, le bis(isocyanatométhyl)-1,2 cyclobutane, le bis(isocyanato-4 cyclohexyl)-méthane, le triméthyl-3,3,5 isocyanatométhyl-5 isocyanato-1 cyclohexane.

Les trimères à cycle isocyanurate de ces diisocyanates aliphatiques sont préparés de manière connue en soi. On peut par exemple les obtenir par chauffage en présence d'un catalyseur tel qu'une amine tertiaire, une phosphine, un oxyde, hydroxyde ou carboxylate de métal alcalin ou alcalino-terreux. Ces catalyseurs sont décrits dans "Journal of Cellular Plastics" de janvier 1965 pages 85 à 90 ou dans "Macromolecular Chemistry" (5/1) pages 103 à 109 (1970).

La demande de brevet français No. 81/02192 (publiée sous le numéro 2 499 085) décrit un procédé de préparation de ces composés à groupement isocyanurate par cyclotrimérisation d'isocyanates aliphatiques catalysée par un disilazane substitué.

La demande de brevet français No. 81-23135 (publiée sous le numéro 2 517 674) décrit un procédé identique au précédent catalysé par un composé à groupement aminosilylé.

De préférence, le rapport pondéral diisocyanate aliphatique/trimère est de 0,10/1 à 0,45/1.

Parmi les diisocyanates aliphatiques que l'on peut utiliser dans le présent procédé, on préfère plus particulièrement le diisocyanato-1,6 hexane (HDI). De préférence le diisocyanato-1,6 hexane est utilisé avec son trimère tris(isocyanato-6 hexyl)-1,3,5 isocyanurate.

La polyamine, que l'on fait réagir sur les composés à groupements isocyanates pour former les parois des microcapsules, est choisie parmi celles qui comprennent au moins deux groupements amine primaire ou secondaire et qui peuvent se dissoudre ou se disperser dans l'eau.

On peut citer à titre d'exemples des diamines comme l'éthylène-diamine-1,2, le diamino-1,3 propane, le diamino-1,4 butane, le diamino-1,6 hexane, l'hydrazine, le diamino-1,4 cyclohexane et le diamino-1,3 méthyl-1 propane.

On peut également citer la diéthylènetriamine, la triéthylène-tétramine et la bis(méthyl-2 amino-éthyl)méthylamine.

On peut bien évidemment utiliser des mélanges de polyamines, par exemple une diamine et une triamine ou une tétraamine.

Le liquide organique hydrophobe dans lequel se trouvent le composé à fonctions isocyanate et éventuellement un produit organique à encapsuler peut être tout liquide essentiellement non-miscible à l'eau et pouvant dissoudre les composés précédents.

Le liquide organique hydrophobe peut également être constitué par le produit organique à encapsuler lorsque celui-ci est liquide et lorsqu'il est utilisé pour des applications nécessitant une forte concentration en produit actif.

On peut utiliser par exemple un hydrocarbure aliphatique, un hydrocarbure aliphatique chloré, un hydrocarbure cycloaliphatique, un hydrocarbure cycloaliphatique chloré, un hydrocarbure aromatique ou un hydrocarbure aromatique chloré.

A titre d'exemples de liquide organique hydrophobe, on peut citer le cyclohexane, le tétrachloroéthylène, le tétrachlorure de carbone, les xylènes, le toluène, les chlorobenzènes, le terphényle au moins partiellement hydrogéné, un alkylbiphényle, un alkylnaphtalène.

Les alkylbiphényles, le terphényle au moins partiellement hydrogéné et les alkylnaphtalènes conviennent tout particulièrement bien pour l'encapsulation de colorants dans les applications papier sans carbone.

Le liquide essentiellement aqueux utilisé dans le procédé de l'invention est généralement l'eau et de préférence une solution aqueuse d'un tensio-actif et/ou d'un colloïde protecteur hydrophile.

La présente invention constitue un perfectionnement à l'invention décrite dans la demande de brevet No. 85-18453, plus particulièrement en ce qui concerne le choix du colloïde protecteur hydrophile et/ou du tensio-actif.

En effet, il a été observé que pour obtenir une émulsion (et par voie de conséquence des microcapsules après la réaction de polyaddition), comportant des gouttelettes de liquide organique hydrophobe très fines dans la phase aqueuse, il est préférable que le colloïde protecteur hydrophile et/ou le tensio-actif soient choisis de telle façon que la tension interfaciale entre d'une part la phase aqueuse contenant le colloïde protecteur et/ou le tensio-actif et d'autre part la phase organique hydrophobe, soit comprise entre 0 et 20 milliNewton/mètre (mN/m).

De préférence la tension interfaciale sera comprise entre 9 et 15 mN/m.

La tension superficielle de la phase aqueuse sera de préférence comprise entre 30 mN/m et 60 mN/m.

Les familles de colloïdes protecteurs qui conviennent plus particulièrement sont notamment : les copolymères maléiques-vinyliques tels que les copolymères d'éthers vinyliques et d'anhydride ou d'acide maléique, commercialisés sous la marque déposée GANTREZ ; les lignosulfonates de sodium tels que ceux commercialisés sous la marque déposée POLYFON ; les copolymères anhydride maléique/styrène tels que ceux commercialisés sous la marque déposée SCRIPTSET ; les copolymères éthylène/anhydride maléique tels que ceux commercialisés sous la marque déposée EMA ; les copolymères d'oxyde de propylène, d'éthylènediamine et d'oxyde d'éthylène commercialisés sous la marque TETRONIC.

Les tensio-actifs qui conviennent plus particulièrement dans la présente invention sont notamment les esters d'acides gras du sorbitol polyoxyéthyléné tels que ceux commercialisés sous la marque déposée MONTANOX et le dodécylsulfate de sodium.

Lorsque ces colloïdes protecteurs ou tensio-actifs peuvent se trouver sous différentes formes telles que forme salifiée, forme anhydride ou forme acide, on préfère généralement les utiliser sous les formes anhydride ou acide plutôt que sous la forme saline.

Ainsi c'est le cas par exemple pour les copolymères d'éthers vinyliques et d'anhydride ou d'acide maléique.

En effet, généralement les solutions aqueuses des formes salines de ces colloïdes protecteurs ou tensio-actifs présentent une tension superficielle plus élevée que les solutions aqueuses des formes acide ou anhydride. Or, comme indiqué précédemment, il est préférable dans le cadre de la présente invention, d'utiliser des phases aqueuses contenant les colloïdes protecteurs et/ou les tensio-actifs qui présentent une tension superficielle comprise entre 30 et 60 mN/m.

De manière encore préférée, on utilisera des phases aqueuses dont la tension superficielle sera comprise entre 35 et 50 mN/m.

La tension superficielle des phases aqueuse et organique peut être mesurée par toute méthode connue (voir par exemple le projet de norme ISO/DIS 304).

On peut notamment utiliser la méthode de lame de WILHELMY qui est décrite dans "Physical Chemistry of Surfaces" de Arthur W. ADAMSON, 3ème édition, John Wiley and Sons (1976), page 23 chapitre I.

La tension interfaciale entre les deux phases correspond à la différence entre les tensions superficielles des deux phases ; cependant la mesure effectuée donne parfois des résultats légèrement différents.

Généralement les colloïdes protecteurs sont dans la phase aqueuse à une concentration pondérale de 0,1 à 5 % et de préférence de 0,5 à 3 %.

Les tensio-actifs sont habituellement utilisés à des concentrations pondérales plus faibles, par exemple de 0,001 à 3 % et de préférence de 0,005 à 2 %.

Le produit se trouvant dans le liquide organique hydrophobe et que l'on souhaite encapsuler peut être de nature très diverse.

On peut par exemple encapsuler des produits phytosanitaires, tels que des herbicides, des fongicides ou des insecticides, ce qui rend leur manipulation moins dangereuse.

On peut également encapsuler des produits pharmaceutiques, des produits alimentaires, des arômes, des parfums, des colorants, des peintures ou des catalyseurs.

Une des applications préférées du procédé de l'invention réside dans la microencapsulation de colorants, pour la préparation de papier sans carbone sensible à la pression. Le procédé de l'invention conduit à des microcapsules ayant des parois étanches convenant à l'application ; cela permet de préparer des papiers à copies multiples qui ne libèrent pas de colorant lors de leur stockage ou de leur manipulation.

En outre le procédé de l'invention permet de préparer des suspensions de microcapsules ayant une fluidité suffisante pour permettre un couchage régulier et fin sur papier.

A l'aide de ce procédé, on peut obtenir des suspensions de microcapsules de concentrations relativement élevées, ce qui présente un intérêt au plan de l'application papetière, car l'eau doit être ensuite éliminée.

Généralement pour ce type d'application, la concentration en microcapsules est égale ou supérieure à 25 % en poids et de préférence égale ou supérieure à 30 % en poids.

Comme colorants, on peut utiliser notamment les dérivés du triphénylméthane, les dérivés du diphénylméthane, les dérivés du fluorane, des dérivés de la thiazine et des dérivés spiranniques.

Parmi les dérivés du triphénylméthane, on peut citer par exemple le bis(paradiméthylaminophényl)-3,3 diméthylamino-6 phtalide; le bis(paradiméthylaminophényl)-3,3 phtalide et le (paradiméthylaminophényl)-3 (diméthyl-1,2 indolyl-3)-3 phtalide.

Parmi les dérivés du diphénylméthane, on peut citer par exemple l'oxyde de bis(aminodiméthyl)-4,4' benzhydryle et de benzyle ; les N-halogénophényl-leucoauramines et la N-(trichlorophényl-2,4,5)-leucoauramine.

Parmi les dérivés du fluorane, on peut citer par exemple le chloro-3 diéthylamino-7 fluorane, le chloro-3 diéthylamino-7 méthyl-2 fluorane et le (N-éthylparatolylamino)-6 méthyl-3 phénylamino-2 fluorane.

Parmi les dérivés de la thiazine, on peut citer par exemple le bleu de benzolleucométhylène et le bleu de paranitrobenzylleucométhylène.

Parmi les dérivés spiranniques, on peut citer par exemple le méthyl-3 spirodinaphtopyranne, l'éthyl-3 spirodinaphtopyranne, le propyl-3 spirodinaphtopyranne et le propyl-3 spirodibenzopyranne.

En pratique on peut réaliser le procéde de la manière suivante.

On prépare une phase aqueuse constituée d'eau, additionnée d'un tensio-actif et/ou d'un colloïde protecteur tels que ceux indiqués précédemment. On peut agiter cette phase à plusieurs milliers de tours par minute, à l'aide d'un agitateur turbine, pendant quelques secondes à quelques minutes, mais ce n'est pas indispensable. On ajoute alors la phase organique hydrophobe constituée par un solvant dans lequel sont dissous le mélange de diisocyanate aliphatique et de son trimère à groupement isocyanurate et le cas échéant le produit à encapsuler. Comme indiqué précédemment, la phase organique hydrophobe peut être également constituée par le produit organique à encapsuler, lorsqu'il est liquide, et le mélange de diisocyanate aliphatique et de son trimère à cycle isocyanurate. Après une durée d'agitation rapide de quelques secondes à quelques minutes, on obtient une émulsion stable. La vitesse d'agitation est réglée de manière à ce que l'on obtienne des gouttelettes le liquide organique hydrophobe dans le phase aqueuse de dimensions souhaitées.

La taille des gouttelettes est fonction du choix du colloïde protecteur et/ou du tensio-actif et de la vitesse d'agitation, cette dernière étant choisie d'autant plus grande que l'on souhaite des diamètres moyens de gouttelettes plus faibles.

La présente invention permet de réaliser des émulsions de très fines gouttelettes de phase organique dans la phase aqueuse. Les microcapsules obtenues après polyaddition interfaciale ont généralement majoritairement un diamètre inférieur ou égal à 10 $\mu$m.

En général la vitesse d'agitation pendant la phase d'émulsion est de 5000 à 10,000 tours par minute. La phase d'émulsion est habituellement effectuée à une température de 15 à 30°C.

Généralement lorsque la phase d'émulsion est terminée, on arrête l'agitation par turbine et on agite l'émulsion à l'aide d'un agitateur courant, par exemple du type agitateur cadre, à une vitesse de l'ordre de 200 à 1000 tours par minutes.

On ajoute alors une solution aqueuse de polyamine. Habituellement la quantité de polyamine introduite est en excès par rapport à la quantité stoechiométrique nécessaire pour transformer les groupements isocyanate libres en groupements urée. Le plus souvent on introduit de 101 % à 150 % de groupements amine par rapport aux groupements isocyanate libres et de préférence de 105 % à 125 %.

On peut également à la fin de la phase d'émulsion, transvaser dans un autre réacteur l'émulsion obtenue et procéder ensuite à la phase de polyaddition décrite précédemment.

On laisse s'effectuer la réaction de polyaddition, généralement à une température de 15°C à 30°C environ pendant une durée allant de quelques minutes à deux heures. Puis, le plus souvent, la température de l'émulsion est montée jusqu'à environ 50°C à 80°C et la réaction est poursuivie à cette température pendant quelques heures, par exemple de 2 à 10 heures.

Il est possible de mettre le procédé de l'invention en oeuvre de manière continue.

Ainsi on peut, par exemple, préparer dans un premier réacteur l'émulsion décrite précédemment ; puis l'émulsion ainsi préparée peut être envoyée en continu dans un autre réacteur agité contenant une solution aqueuse de polyamine ; la réaction de polyaddition interfaciale est réalisée dans le deuxième réacteur et lorsque pratiquement toute la polyamine a réagi, l'émulsion provenant du premier réacteur peut être envoyée dans un troisième réacteur contenant également une solution de polyamine.

Il est bien évident que cette variante d'opération continue n'est pas limitative et que la description qui précède n'a qu'un aspect illustratif.

Les exemples qui suivent illustrent la présente invention.

### ESSAI COMPARATIF

Dans un réacteur de 1,5 litre en verre Pyrex, comportant une double enveloppe permettant une circulation de liquide pour le chauffage ou le refroidissement, un couvercle, un réfrigérant, un agitateur turbine POLYTRON et un agitateur cadre en acier inoxydable recouvert de Téflon, on charge une solution (a) :

- sel de sodium de la carboxyméthylcellulose : 8 g
- eau distillée : 800 cm3.

La tension superficielle de la solution (a) est de 73,1 mN/m.

On agite à l'aide de l'agitateur turbine à 7800 t/min pendant 30 secondes à température ambiante, puis tout en maintenant l'agitation pendant 60 secondes, on ajoute la solution (c) suivante :

- solution de colorant:
  ◆ diisopropylnaphtalène (KMC) : 200 g
  ◆ colorant bleu S 4G Pergascript : 10 g
  ◆ hexadécane : 4 g
- diisocyanato-1,6 hexane : 9,13 g (5,4 x $10^{-2}$ mole)
- tris(isocyanato-6 hexyl)-1,3,5 isocyanurate : 36,5 g (7,2 x $10^{-2}$ mole)

La tension superficielle de la solution (c) est de 35 mN/m.

La tension interfaciale entre les deux phases est d'environ 36 mM/m.

Le rapport pondéral entre le diisocyanate et son trimère est de 0,25/1.

On obtient une émulsion stable de gouttelettes de phase organique dans la phase aqueuse.

On met en marche l'agitateur cadre à 300 t/min, on arrête l'agitateur turbine et on ajoute la solution (b) suivante :

- éthylènediamine : 11,74 g (19,56 x $10^{-2}$ mole)
- eau distillée : 5,8 g.

120 % d'amine par rapport aux isocyanates.

L'agitation est maintenue pendant 30 minutes à température ambiante, puis on chauffe à 60°C au moyen d'une circulation d'eau dans la double enveloppe du réacteur. On maintient cette température pendant 3 heures.

Après refroidissement on obtient une suspension laiteuse qui contient 40 % en poids de microcapsules dont 80 % ont un diamètre inférieur ou égal à 14 μm (granulométrie mesurée à l'aide d'un appareil MALVERN).

Cette suspension est couchée sur la face d'un papier récepteur revêtue au moyen d'une résine acide servant de révélateur (coating fraction : CF). Le couchage de la suspension de microcapsules est effectué à l'aide d'un couteau dont la hauteur est réglée à 20-30 μm par rapport au papier. Le papier ainsi traité est placé en étuve à 100°C à l'abri de la lumière. Après 24 heures on ne constate aucune coloration.

## EXEMPLE 1

Dans un réacteur de 500 cm3 en verre Pyrex, comportant une double enveloppe permettant une circulation de fluide pour chauffage ou refroidissement, un couvercle, un réfrigérant, un agitateur turbine (Polytron) et un agitateur cadre en acier inoxydable recouvert de Teflon, on charge une solution (a) :

- 1,3 g d'un copolymère anhydride maléique/méthylvinyléther (GANTREZ AN 119),
- 65 g d'eau distillée (le copolymère est préalablement dissous par chauffage pendant 2 heures à 70°C).

La tension superficielle de la solution (a) est de 47,1 mN/m.

On agite à l'aide de l'agitateur turbine à 7800 t/min, puis on ajoute la solution (c) :

- solution de colorant comprenant :
♦ terphényle partiellement hydrogéné de marque déposée SOLGYL TH 40 : 51,6 g
♦ hexadécane : 0,8 g
♦ colorants :
   bleu S 4G : 1,35 g
   rouge Pergascript 6 B : 1,35 g
- diisocyanato-1,6 hexane : 2,28 g (1,35 x$10^{-2}$ mole)
- tris(isocyanato-6 hexyl)-1,3,5 isocyanurate : 9,14 g (1,8 x $10^{-2}$ mole).

La tension superficielle de la solution (c) est de 37,8 mN/m.

La tension interfaciale entre les deux phases est d'environ 9 mNm.

Le rapport pondéral entre le diisocyanato-1,6 hexane est son trimère est de 0,25/1.

L'agitation est maintenue durant 60 secondes. On obtient alors une émulsion stable, dont l'examen microscopique permet de constater qu'elle comporte une majorité de gouttelettes ayant un diamètre compris entre 3 et 5 μm.

On met en marche l'agitateur cadre à 300 t/min, on arrête l'agitateur turbine et on ajoute la solution (b) suivante :
- éthylènediamine : 2,94 g (4,9 x $10^{-2}$ mole)
- eau distillée : 35 g.

L'agitation est maintenue durant 30 minutes à température ambiante, puis on chauffe à 60°C au moyen d'une circulation d'eau dans la double enveloppe du réacteur. On maintient cette température pendant 3 heures.

Après refroidissement, on obtient une suspension laiteuse qui contient 40 % en poids de microcapsules ayant en majorité (80 % environ) un diamètre inférieur ou égal à 8 μm (granulométrie mesurée à l'aide d'un appareil MALVERN).

Cette suspension est utilisée en couchage sur un papier révélateur (CF), sur une épaisseur de 20 à 30 μm. Après 24 h à l'étuve à 100°C, à l'abri de la lumière, on ne constate aucune coloration.

## EXEMPLE 2

Dans le même réacteur et en opérant dans les mêmes conditions qu'à l'exemple 1, on met en oeuvre les solutions suivantes.

Solution (a) :
- 1,3 g d'un copolymère acide maléique/méthylvinyléther (GANTREZ S 95),
- 65 g d'eau distillée (le copolymère est préalablement dissous par agitation pendant 15 minutes à température ambiante).

La tension superficielle de la solution (a) est de 49,6 mN/m.

Solution (c) :
- solution de colorant comprenant :
♦ diisopropylnaphtalène (KMC 113) : 51,6 g
♦ hexadécane : 0,8 g
♦ colorants :
   bleu S 4G : 1,35 g
   bleu I 2R : 1,35 g
- diisocyanato-1,6 hexane : 2,28 g (1,35 x$10^{-2}$ mole)
- tris(isocyanato-6 hexyl)-1,3,5 isocyanurate : 9,14 g (1,8 x $10^{-2}$ mole).

La tension superficielle de la solution (c) est de 35 mN/m.

La tension interfaciale entre les deux phases est d'environ 14 mN/m.

Solution (b) :
- éthylènediamine : 2,94 g (4,9 x $10^{-2}$ mole)
- eau distillée : 35 g.

On obtient les résultats suivants :
- diamètre des microcapsules : en majorité compris entre 5 et 8 μm
- environ 80 % des microcapsules ont un diamètre inférieur ou égale à 9 μm (appareil MALVERN)
- couchage du papier : après 24 heures à 100°C pas de coloration.

## EXEMPLE 3

Dans le même réacteur et en opérant dans les mêmes conditions qu'à l'exemple 1, on met en oeuvre les solutions suivants.

Solution (a) :
- 1,3 g d'un copolymère anhydride maléique/méthylvinyléther (GANTREZ AN 119),

- 65 g d'eau distillée (le copolymère est préalablement dissous par chauffage pendant 2 heures à 70°C).

La tension superficielle de la solution (a) est de 49,6 mN/m.

Solution (c) :
-solution de colorant comprenant :
♦ diisopropylnaphtalène (KNC 113) : 51,6 g
♦ hexadécane : 0,8 g
♦ colorants :
bleu S 4G : 1,35 g
bleu I 2R : 1,35 g

La tension interfaciale entre les deux phases est d'environ 14 mN/m.

Solution (b) :
- éthylènediamine : 2.94 g (4,9 x 10⁻² mole)
- eau distillée : 35 g.

On obtient les résultats suivants :
- diamètre des microcapsules : en majorité compris entre 5 et 8 µm
- environ 80 % des microcapsules ont un diamètre inférieur ou égal à 9 µm (appareil MALVERN)
- couchage du papier : après 24 heures à 100°C pas de coloration.

## EXEMPLE 4

Dans le même réacteur et en opérant dans les mêmes conditions qu'à l'exemple 1, on met en oeuvre les solutions suivantes.

Solution (a) :
- 1,3 g d'un copolymère éthylène/anhydride maléique (EMA 21),
- 65 g d'eau distillée (le copolymère est préalablement dissous par chauffage pendant 2 heures à 70°C).

La tension superficielle de la solution (a) est de 41 mN/m.

Solution (c) :
-solution de colorant comprenant :
♦ terphényle partiellement hydrogéné de marque déposée SOLGYL TH 40 : 51,6 g
♦ hexadécane : 0,8 g
♦ colorant rouge Pergascript 6 B : 1,35 g
- diisocyanato-1,6 hexane : 2,28 g (1,35 x10⁻² mole)
- tris(isocyanato-6 hexyl)-1,3,5 isocyanurate : 9,14 g (1,8 x 10⁻² mole).

La tension superficielle de la solution (c) est de 37,8 mN/m.

La tension interfaciale entre les deux phases est d'environ 3 mN/m.

Solution (b) :
- éthylènediamine : 2.94 g (4,9 x 10⁻² mole)
- eau distillée: 35 g.

On obtient les résultats suivants :
- diamètre des microcapsules : en majorité compris entre 5 et 8 µm
- environ 80 % des microcapsules ont un diamètre inférieur ou égale à 9 µm (appareil MALVERN)

-couchage du papier: après 24 heures à 100°C pas de coloration.

## EXEMPLE 5 Essai en continu

### APPAREILLAGE

Il comprend:
- une pompe d'alimentation multitêtes (de marque MILTON ROY);
- un émulsionneur en verre, à double paroi avec possibilité de circulation d'un fluide chaud ou froid, d'une contenance de 260 cm3; alimentation dans sa partie supérieure par des tubes flexibles; agitation par agitateur turbine ULTRA-TURAX T45 ;
- un réacteur cylindrique en verre de 5 litres, à double paroi, avec agitateur à ancre et à chicanes, comportant une vanne de soutirage à sa partie inférieure.

L'émulsionneur peut fonctionner en continu et alimenter le réacteur par débordement latéral (trop plein), le temps de séjour nécessaire pour la qualité de l'émulsion étant réglé par les débits d'alimentation.

### SOLUTIONS

Solution (a) :
- 44 g d'un copolymère anhydride maléique/méthylvinyléther (GANTREZ AN 119),
- 2200 g d'eau distillée (le copolymère est préalablement dissous par chauffage pendant 2 heures à 70°C).

La tension superficielle de la solution (a) est de 47,1 mN/m.

Solution (c) :
- Cristal violet lactone : 52,5 g
- Bleu S 4G : 36 g
- diisopropylnaphtalène : 1652 g.

Les colorants sont dissous à 80°C dans le diisopropylnaphtalène.

Après refroidissement, on ajoute :
- 27 g d'hexadécane
- puis 73 g de diisocyanato-1,6 hexane (0,43 mole)
- et 292,4 g de tris(isocyanato-6 hexyl)-1,3,5 isocyanurate (0,58 mole).

Rapport pondéral d'isocyanate/trimère : 0,20/1

Solution (b) :
- 86 g (1,43 mole) d'éthylènediamine
- 1000 g d'eau distillée.

110 % d'amine par rapport aux isocyanates.

### OPERATION

On charge la solution (b) dans le réacteur de 5 litres et on agite à 300 t/min.

On alimente l'émulsionneur d'une part par la solution (a) à raison de 4,056 litres/heure, d'autre part par la solution (c) à raison de 3,66 litres/heure. Cela correspond à une durée de mise en émulsion d'environ 60 secondes.

La vitesse d'agitation à l'Ultra-turax est de 8500 t/min.

Il faut environ 30 minutes pour que la totalité des solutions (a) et (c) soit dans le réacteur de 5 litres après émulsion.

On agite pendant 30 minutes à température ambiante dans le réacteur de 5 litres, puis on chauffe la masse réactionnelle par une circulation d'eau à 60°C pendant 3 heures.

Après refroidissement, on soutire une suspension laiteuse de 4818 g, contenant 40 % en poids de microcapsules. Des mesures de granulométrie à l'aide d'un appareil MALVERN montrent que la granulométrie est centrée sur 5 µm (80 % environ des microcapsules ont un diamètre inférieur ou égal à 10 µm).

## Revendications

1°) Procédé de microencapsulation par polyaddition interfaciale consistant à émulsionner :
- dans un liquide essentiellement aqueux comprenant un colloïde protecteur et/ou un tensio-actif,
- un liquide organique hydrophobe contenant un polyisocyanate, constitué par un diisocyanate aliphatique et le trimère à cycle isocyanurate d'un diisocyanate aliphatique avec un rapport pondéral diisocyanate aliphatique/trimère de 0,05/1 à 0,70/1, et éventuellement un produit organique dissous,
puis à former les parois des microcapsules par addition d'une polyamine, ledit procédé étant caractérisé en ce que la tension interfaciale entre la phase aqueuse et la phase organique hydrophobe est comprise entre 0 et 20 mN/m.

2°) Procédé selon la revendication 1, caractérisé en ce que la tension interfaciale entre la phase aqueuse et la phase organique hydrophobe est comprise entre 0 et 15 mN/m.

3°) Procédé selon l'une des revendications 1 et 2, caractérisé en ce que la tension superficielle de la phase aqueuse est comprise entre 30 et 60 mN/m.

4°) Procédé selon l'une des revendications 1 à 3, caractérisé en ce que la tension superficielle de la phase aqueuse est comprise entre 35 et 50 mN/m.

5°) Procédé selon l'une des revendications 1 à 4, caractérisé en ce que les colloïdes protecteurs sont choisis plus particulièrement parmi les copolymères maléiques-vinyliques tels que les copolymères d'éthers vinyliques et d'anhydride ou d'acide maléique, les lignosulfonates de sodium, les copolymères anhydride maléique/styrène, les copolymères éthylène/anhydride maléique, les copolymères d'oxyde de proylène, d'éthylènediamine et d'oxyde d'éthylène et les tensio-actifs sont choisis plus particulièrement parmi les esters d'acides gras du sorbitol polyoxyéthyléné et le dodécylsulfate de sodium.

6°) Procédé selon l'une des revendications 1 à 5, caractérisé en ce que les colloïdes protecteurs ont une concentration pondérale dans la phase aqueuse de 0,1 à 5 % et de préférence de 0,5 à 3 %.

7°) Procédé selon l'une des revendications 1 à 5, caractérisé en ce que les tensio-actifs ont une concentration pondérale dans la phase aqueuse de 0,001 à 3 % et de préférence de 0,005 à 2 %.

8°) Procédé selon l'une des revendications 1 à 7, caractérisé en ce que le polyisocyanate utilisé comprend :
- un diisocyanate aliphatique choisi parmi le diisocyanato-1,6 hexane, le diisocyanato-1,5 méthyl-2 pentane, le diisocyanato-1,5 méthyl-3 pentane, le diisocyanato-1,4 diméthyl-2,3 butane, l'éthyl-2 diisocyanato-1,4 butane, le diisocyanato-1,5 pentane, le diisocyanato-1,4 butane, le diisocyanato-1,3 propane, le diisocyanato-1,10 décane, le diisocyanato-1,2 cyclobutane, le bis(isocyanato-4 cyclohexyl)méthane, le triméthyl-3,3,5 isocyanatométhyl-5 isocyanato-1 cyclohexane,
- et le trimère à groupement isocyanurate d'un de ces diisocyanates aliphatiques.

9°) Procédé selon l'une des revendications 1 à 8, caractérisé en ce que la polyamine utilisée est choisie parmi celles qui comprennent au moins deux groupements amine primaire ou secondaire et qui peuvent se dissoudre ou se dispenser dans l'eau.

10°) Procédé selon l'une des revendications 1 à 9, caractérisé en ce que le liquide organique hydrophobe est un hydrocarbure aliphatique, un hydrocarbure aliphatique chloré, un hydrocarbure cycloaliphatique, un hydrocarbure cycloaliphatique chloré, un hydrocarbure aromatique ou un hydrocarbure aromatique chloré.

11°) Procédé selon la revendication 10, caractérisé en ce que le liquide organique hydrophobe est choisi parmi les alkylbiphényles, le terphényle au moins partiellement hydrogéné et les alkylnaphtalènes.

12°) Suspension aqueuse de microcapsules contenant un colorant pour la fabrication de papier sans carbone, caractérisé en ce qu'elle est obtenue par le procédé selon l'une des revendications 1 à 11.

## Claims

1. Process of microencapsulation by interfacial polyaddition consisting in emulsifying: in an essentially aqueous liquid containing a protective colloid and/or a surfactant, a hydrophobic organic liquid containing a polyisocyanate consisting of an aliphatic diisocyanate and the isocyanate consisting of an aliphatic diisocyanate with an aliphatic diisocyanate/trimer weight ratio of 0.51/1 to 0.70/1, and, if appropriate, a dissolved organic product, and in then forming the walls of the microcapsules by adding a polyamide, the said process being characterized in that the interfacial tension between the aqueous phase and the hydrophobic organic phase is between 0 and 20 mN/m.

2. Process according to claim 1, characterized in that the interfacial tension between the aqueous phase and the hydrophobic organic phase is between 0 and 15 mN/m.

3. Process according to either of claims 1 and 2, characterized in that the surface tension of the aqueous phase is between 30 and 60 mN/m.

4. Process according to either of claims 1 to 3, characterized in that the suface tension of the aqueous phase is between 35 and 50 mN/m.

5. Process according to one of claims 1 to 4, characterized in that the protective colloids are chosen more particularly from maleic-vinyl copolymers such as the copolymers of vinyl ethers and maleic anhydride or acid, sodium lignosulphonates, maleic anhydride/styrene copolymers, ethylene/maleic anhydride copolymers and copolymers of propylene oxide, ethylenediamine and ethylene oxide, and the surfactants are chosen more particularly from fatty acid esters of polyoxyethylenated sorbitol and sodium dodecylsulphate.

6. Process according to one of claims 1 to 5, characterized in that the protective colloids have a weight concentration in the aqueous phase of 0.1 to 5% and preferably form 0.5 to 3%.

7. Process according to one of claims 1 to 5, characterized in that the surfactants have a weight concentration in the aqueous phase of 0.001 to 3% and preferably from 0.005 to 2%.

8. Process according to one of claims 1 to 7, characterized in that the polyisocyanate employed comprises: an aliphatic diisocyanate chosen form 1,6-diisocyanatohexane, 1,5-diisocyanato-2-methylpentane, 1,5-diisocyanato-3-methylpentane, 1,4-diisocyanato-2,3-dimethylbutane, 2-ethyl-1,4-diisocyanatobutane, 1,5-diisocyanatopentane, 1,4-diisocyanatobutane, 1,3-diisocyanatopropane, 1,10-diisocyanatodecane, 1,2-diisocyanatocyclobutane, bis-(4-isocyanatocyclohexyl)methane, and 3,3,5-trimethyl-5-isocyanatomethyl-1-isocyanatocyclohexane, and the isocyanurate group trimer of one of these aliphatic diisocyanates.

9. Process according to one of claims 1 to 8, characterized in that the polyamine employed is chosen from those which contain at least to primary or secondary amine groups and which can dissolve or be dispersed in water.

10. Process according to one of claims 1 to 9, characterized in that the hydrophobic organic liquid is an aliphatic hydrocarbon, a chlorinated aliphatic hydrocarbon, a cycloaliphatic hydrocarbon, a chlorinated cycloaliphatic hydrocarbon, an aromatic hydrocarbon or a chlorinated aromatic hydrocarbon.

11. Process according to claim 10, characterized in that the hydrophobic organic liquid is chosen from alkylbiphenyls, at least partially hydrogenated terphenyl and alkylnaphthalenes.

12. Aqueous suspension of microcapsules containing a dye for the manufacture of carbonless paper, characterized in that it is obtained by the process according to one of claims 1 to 11.

**Patentansprüche**

1. Verfahren zur Mikroverkapselung durch Grenzflächenpolyaddition, darin bestehend, daß emulgiert wird: in einer im wesentlichen wäßrigen Flüssigkeit, enthaltend ein Schutzkolloid und/oder ein Tensid, eine hydrophobe, organische Flüssigkeit, enthaltend ein Polyisocyanat, bestehend aus aliphatischem Diisocyanat und dem Trimeren mit Isocyanuratcyclus eines aliphatischen Diisocyanats mit einem Gewichtsverhältnis aliphatisches Diisocyanat/Trimeres von 0,05/1 bis 0,70/1 und gegebenenfalls ein gelöstes, organisches Produkt, und dann die Wände der Mirkokapseln durch Zugabe eines Polyamins gebildet werden, dadurch gekennzeichnet, daß die Grenzflächenspannung zwischen der wäßrigen Phase und der hydrophoben, organischen Phase zwischen 0 und 20 mN/m liegt.

2. Verfahren gemäß Anspruch 1, dadurch gekennzeichnet, daß die Grenzflächenspannung zwischen der wäßrigen Phase und der hydrophoben, organischen Phase zwischen 0 und 15 mN/m liegt.

3. Verfahren gemäß einem der Ansprüche 1 und 2, dadurch gekennzeichnet, daß die Oberflächenspannung der wäßrigen Phase zwischen 30 und 60 mN/m liegt.

4. Verfahren gemäß den Ansprüchen 1 bis 3, dadurch gekennzeichnet, daß die Oberflächenspannung der wäßrigen Phase zwischen 35 und 50 mN/m liegt.

5. Verfahren gemäß einem der Ansprüche 1 bis 4, dadurch gekennzeichnet, daß die Schutzkolloide besonders ausgewählt sind unter den Malein-Vinyl-Copolymeren, wie den Copolymeren von Vinylethern und Maleinsäureanhydrid oder Maleinsäure, den Natriumlignosulfonaten, den Copolymeren Maleinsäureanhydrid/Styrol, den Copolymeren Ethylen/Maleinsäureanhydrid, den Copolymeren Propylenoxid, Ethylendiamin und Ethylenoxid, und die Tenside besonders ausgewählt sind unter den Fettsäureestern des polyoxyethylenierten Sorbits und Natriumdodecylsulfat.

6. Verfahren gemäß einem der Anprüche 1 bis 5, dadurch gekennzeichnet, daß die Schutzkolloide eine Gewichtskonzentration in der wäßrigen Phase von 0,1 bis 5% und vorzugsweise ovn 0,5 bis 3% haben.

7. Verfahren gemäß einem der Ansprüche 1 bis 5, dadurch gekennzeichnet, daß die Tenside eine Gewichtskonzentration in der wäßrigen Phase von 0,001 bis 3% und vorzugsweise von 0,005 bis 2% haben.

8. Verfahren gemäß einem der Anprüche 1 bis 7, dadurch gekennzeichnet, daß das verwendete Polyisocyanat enthält: ein aliphatisches Diisocyanat, ausgewählt unter 1,6-Diisocyanatohexan, 1,5-Diisocyanato-2-methylpentan, 1,5-Diisocyanato-3-methylpentan, 1,4-Diisocyanato-2,3-dimethylbutan, 2-Ethyl-1,4-diisocyanatobutan, 1,5-Diisocyanatopentan, 1,4-Diisocyanatobutan, 1,3-Diisocyanatopropan, 1,10-Diisocyanatodecan, 1,2-Diisocyanatocyclobutan, Bis-(4-isocyanatocyclohexyl)methan, 3,3,5-Trimethyl-5-isocyanatomethyl-1-isocyanatocyclohexan, und das Trimere mit Isocyanuratgruppen eines dieser aliphatischen Diisocyanate.

9. Verfahren gemäß einem der Ansprüche 1 bis 8, dadurch gekennzeichnet, daß das verwendete Polyamin ausgewählt ist unter denjenigen, die mindestens zwei primäre oder sekundäre Amingruppen enthalten und die sich in Wasser auflösen oder dispergieren könne.

10. Verfahren gemäß einem der Ansprüche 1 bis 9, dadurch gekennzeichnet, daß die hydrophobe, organische Flüssigkeit ein aliphatischer Kohlenwasserstoff, ein chlorierter, aliphatischer Kohlenwasserstoff, ein cycloaliphatischer Kohlenwasserstoff, ein chlorierter, cycloalipatischer Kohlenwasserstoff, ein aromatischer Kohlenwasserstoff oder ein chlorierter, aromatischer Kohlenwasserstoff ist.

11. Verfahren gemäß Anspruch 10, dadurch gekennzeichnet, daß die hydrophobe, organische Flüssigkeit ausgewählt ist unter den Alkylbiphenylen, dem mindestens teilweise hydrierten Terphenyl und den Alkylnaphthalinen.

12. Wäßrige Suspension von Mikrokapseln, enthaltend einen Farbstoff zur Herstellung von kohlefreiem Kopierpapier, dadruch gekennzeichnet, daß sie nach dem Verfahren gemäß einem der Ansprüche 1 bis 11 erhalten ist.